(19) **Europäisches Patentamt / European Patent Office / Office européen des brevets**

(11) **EP 2 659 478 B1**

(12) **FASCICULE DE BREVET EUROPEEN**

(45) Date de publication et mention de la délivrance du brevet:
**22.02.2017 Bulletin 2017/08**

(21) Numéro de dépôt: **11808226.2**

(22) Date de dépôt: **28.12.2011**

(51) Int Cl.:
*G09G 5/02* (2006.01)   *G06F 3/14* (2006.01)
*H04N 9/67* (2006.01)   *H04N 9/68* (2006.01)
*H04N 21/2343* (2011.01)   *H04N 21/258* (2011.01)

(86) Numéro de dépôt international:
**PCT/EP2011/074148**

(87) Numéro de publication internationale:
**WO 2012/089766 (05.07.2012 Gazette 2012/27)**

(54) **PROCEDE DE TRAITEMENT D'UN CONTENU VIDEO PERMETTANT L'ADAPTATION A PLUSIEURS TYPES DE DISPOSITIFS D'AFFICHAGE**

VERFAHREN ZUR VERARBEITUNG EINES VIDEOINHALTS MIT ANPASSUNG AN MEHRERER ARTEN VON ANZEIGEVORRICHTUNGEN

METHOD OF PROCESSING A VIDEO CONTENT ALLOWING THE ADAPTATION TO SEVERAL TYPES OF DISPLAY DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2010 FR 1061376**

(43) Date de publication de la demande:
**06.11.2013 Bulletin 2013/45**

(73) Titulaire: **Thomson Licensing**
**92130 Issy-les-Moulineaux (FR)**

(72) Inventeurs:
• **GUERMOUD, Hassane**
**F-35576 Cesson-Sevigne (FR)**
• **STAUDER, Jürgen**
**F-35576 Cesson-Sevigne (FR)**
• **BLONDÉ, Laurent**
**F-35576 Cesson-Sevigne (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**WO-A1-2010/021705    WO-A2-2008/100946**

**Description**

L'invention concerne notamment l'adaptation de contenus vidéo à un type donné de dispositif d'affichage vidéo.

Les dispositifs d'affichage d'images comprennent, notamment, les panneaux plasma (« PDP », pour « plasma display pannel » en langue anglaise), les panneaux à cristaux liquides (« LCD », ou « liquid crystal display » en langue anglaise) et les projecteurs vidéo. Il existe en outre différents types de PDP, et différents types de LCD, se différenciant par des caractéristiques d'affichage différentes. Parmi ces caractéristiques d'affichage, on compte, notamment, des caractéristiques colorimétriques, comme la gamme de couleurs (« color gamut » en langue anglaise) qu'un dispositif d'affichage est capable de reproduire.

Pour obtenir une reproduction quasi-identique d'un contenu vidéo donné sur différents types de dispositifs d'affichage d'images, il est nécessaire d'adapter au préalable ce contenu vidéo au type de dispositif d'affichage d'images sur lequel on a l'intention de l'afficher.

A cet effet d'adaptation, le document WO2008/085150 décrit un système de diffusion de contenu vidéo tel que schématisé à la figure 1 comprenant d'un côté une plateforme de stockage de contenus vidéo relié à un serveur de vidéo à la demande (« VOD »), et, de l'autre côté, un décodeur domestique relié à un dispositif d'affichage d'images. Ce système comprend également des moyens de transmission aptes à transmettre des contenus vidéo du serveur au décodeur. Ces moyens de transmission peuvent être par exemple filaires, comme une liaison ADSL ou une fibre optique, ou peuvent être par exemple Hertziens.

Selon la méthode de transmission décrite dans le document WO2008/085150, on prépare du côté du serveur différentes version Film_V1, Film_V2, Film_V3, ..., d'un même contenu vidéo de base Film_V0, chaque version étant adaptée à un type prédéterminé de dispositif d'affichage d'images. Le décodeur est adapté pour reconnaître le type de dispositif d'affichage d'images auquel il est connecté, et pour transmettre cette information au serveur de manière à ce que le serveur puisse sélectionner et transmettre au décodeur la version du contenu vidéo qui correspond au type de dispositif d'affichage d'images connecté au décodeur. On parvient ainsi à obtenir sur différents types de dispositifs d'affichage un affichage quasi-identique d'un contenu vidéo donné.

On connaît différentes méthodes d'adaptation d'un contenu vidéo donné à un dispositif donné d'affichage d'images. En langue anglaise, de telles méthodes sont par exemple appelées « color grading », ou « color correction », ou, plus généralement « mastering ». L'adaptation du contenu vidéo peut être représentée par une « transformée de couleur » (« color transform » en langue anglaise) ou une carte de tonalités (« tone map »).

Un inconvénient que posent le système et la méthode de transmission de contenu vidéo qui vient d'être décrit est qu'il nécessite la préparation et le stockage d'un grand nombre de versions différentes d'un même contenu vidéo, ce qui nécessite des ressources importantes et coûteuses de traitement et de stockage.

Pour éviter cet inconvénient, le document EP1845704 (SHARP) décrit un système et une méthode de transmission où, au lieu de stocker différentes versions d'un même contenu vidéo du côté du serveur, on se contente de stocker différentes « transformées de couleur» Tr_1, Tr_2, Tr_3, ... qui, par application à un contenu vidéo de base Film_V0 à transmettre, permettent d'obtenir les différentes versions Film_V1, Film_V2, Film_V3, ... précédemment décrites. Comme précédemment, le décodeur est adapté pour reconnaître le type de dispositif d'affichage d'images auquel il est connecté, et pour transmettre cette information au serveur de telle sorte que le serveur puisse sélectionner et transmettre au décodeur la « transformée de couleur » qui correspond au type de dispositif d'affichage d'images connecté au décodeur.

Après réception du contenu vidéo de base Film_V0 et de cette « transformée de couleur », le décodeur se charge de traiter le contenu vidéo de base à l'aide de cette « transformée de couleur » pour créer, par exemple en temps réel, la version du contenu vidéo qui est adaptée au dispositif d'affichage d'images. On parvient ainsi à obtenir sur différents types de dispositifs d'affichage d'images un affichage quasi-identique d'un contenu vidéo donné.

Les documents US2002118380 (XEROX), WO2008/100946 A2, WO2010/021705 A1 et US2005134801 (KODAK) décrivent des variantes de cette méthode et/ou d'autres moyens de transmettre une « transformée de couleur ».

Un inconvénient que pose cette méthode de transmission de contenu vidéo qui vient d'être décrite est qu'elle nécessite une puissance de traitement importante du côté du décodeur ou du dispositif d'affichage d'images. Un autre inconvénient est que la même transformée de couleur est utilisée pour tout le contenu vidéo affichée sur le même dispositif d'affichage.

Un but de l'invention est un meilleur compromis entre les deux inconvénients précités.

A cet effet, l'invention a pour objet un procédé de traitement d'un contenu vidéo comprenant une succession temporelle d'images de base à l'aide d'au moins une image prétransformée qui est associée à une desdites images de base, chaque image de base à laquelle est associée au moins une image prétransformée étant appelée « image clé », où chaque image prétransformée représente une transformation de couleur de ladite image-clé associée, ledit procédé comprenant les étapes dans lesquelles :

- à partir de chaque image-clé et d'une image prétransformée qui lui est associée, on déduit une transformée de couleur apte à transformer ladite image-clé en ladite image prétransformée,

- à chaque image-clé, on associe une sélection d'images de base qui sont différentes de ladite l'image-clé,
- on applique chaque transformée de couleur à chacune des images de base de la sélection d'images de base qui est associée à ladite image-clé, de manière à obtenir des images transformées.

Selon l'invention, chaque image prétransformée associée à une image-clé coïncide avec l'image qu'on obtiendrait par application à cette image-clé de la transformée de couleur déduite, comme indiqué ci-dessus, à partir de cette image-clé et de cette image prétransformée.

De préférence, chaque image-clé, est associée une pluralité d'images prétransformées.

De préférence, le procédé est adapté pour l'affichage dudit contenu vidéo à l'aide de différents types de dispositifs d'affichage, et chaque image prétransformée de ladite pluralité représente une transformation de ladite image-clé qui adaptée à l'affichage de ladite image-clé par un desdits types de dispositif d'affichage.

De préférence, le procédé comprend également les étapes dans lesquelles :

- on identifie au moins un type de dispositif d'affichage à l'aide duquel on souhaite afficher ledit contenu vidéo,
- pour effectuer ladite déduction de transformée de couleur à partir de chaque image clé, on sélectionne auparavant l'image prétransformée à associer à ladite image-clé en fonction dudit type de dispositif d'affichage identifié.

Lorsque, à chaque image-clé est associée une pluralité d'images prétransformées, on sélectionne l'image prétransformée parmi cette pluralité.

L'invention a également pour objet un procédé d'affichage d'un contenu vidéo à l'aide d'un dispositif d'affichage d'un type prédéterminé, comprenant un traitement du contenu vidéo selon l'invention, et une étape d'affichage des images transformées et de l'au moins une image pré-transformée qui est sélectionnée, dans le même ordre temporel de succession que celui des images de base correspondantes du contenu vidéo.

L'invention a également pour objet un récepteur de contenu vidéo apte à être connecté à un serveur et à au moins un dispositif d'affichage d'images comprenant des moyens pour :

- recevoir un contenu vidéo comprenant une succession temporelle d'images,
- identifier le type $T_i$, $T_k$ de chaque dispositif d'affichage auquel ce récepteur est connecté ;
- transmettre les informations correspondantes d'identification de ce type au serveur ;
- détecter, parmi les images du contenu vidéo reçu, des images dites images clé, et, avec chaque image clé détectée, une image prétransformée associée pour chaque type identifié de dispositif d'affichage ;
- déduire de chaque paire formée par une image clé Im_$K_j$ et par une image prétransformée associée Im_$V_{ji}$, une transformée de couleur Tr$_{ji}$ apte à transformer cette image clé en cette image prétransformée et applicable à toute autre image du contenu vidéo reçu ;
- recevoir, avec le contenu vidéo, des informations qui permettent de sélectionner, pour chaque image clé détectée, les autres images du contenu vidéo qu'il convient de transformer de la même façon que l'est cette image clé en l'une des d'images prétransformées associées ;
- en lien avec la détection de chaque image clé Im_$K_j$, et à l'aide desdites informations reçues avec le contenu vidéo, opérer dans le contenu vidéo une sélection d'images à transformer à l'aide de l'au moins une transformée de couleur déduite d'une paire comprenant ladite image clé;
- appliquer chaque transformée de couleur aux images sélectionnées en lien avec l'image clé Im_$K_j$ comprise dans la paire de laquelle est déduite cette transformée de couleur ;
- adresser à chaque dispositif d'affichage connecté au récepteur un contenu vidéo modifié comprenant les images prétransformées qui sont associées au type identifié $T_i$, $T_k$ dudit dispositif d'affichage et comprenant les images transformées obtenues par l'application des transformées de couleur déduites des paires comprenant lesdites images prétransformées, dans le même ordre temporel de succession que celui des images correspondantes du contenu vidéo reçu.

Ce récepteur peut être notamment un décodeur. Ce décodeur peut être intégré à un dispositif d'affichage.

Un avantage de l'invention est qu'une seule version d'un film est stockée du côté de l'émission, avec seulement un nombre limité d'images prétransformées.

L'invention permet de n'avoir à préparer que ces images prétransformées au lieu de versions complètes différentes du contenu vidéo.

Un avantage de l'invention est également d'être compatible avec les récepteurs qui ne sont pas adaptés pour détecter les images-clés et les images prétransformées dans le flux transmis.

En résumé, l'invention a pour objet un procédé de traitement d'un contenu vidéo permettant l'adaptation à plusieurs types de dispositifs d'affichage, où chaque image du contenu est transformée à l'aide d'au moins une image prétransformée qui est associée à une image clé de ce contenu dans lequel, à partir de chaque image-clé et d'une image prétransformée qui lui est associée, on déduit une transformée de couleur, et dans lequel on applique chaque transformée de couleur à une sélection d'images de ce contenu qui est associée à ladite image-clé.

Appliquée à un système de diffusion de contenu comprenant un serveur et un récepteur auquel sont connectés plusieurs types de dispositifs d'affichage, l'invention permet avantageusement d'adapter le contenu à ces différents types.

L'invention sera mieux comprise à la lecture de la description qui va suivre, donnée à titre d'exemple non limitatif, et en référence aux figures annexées sur lesquelles :

- la figure 1, déjà décrite, schématise un système de diffusion de contenu vidéo de l'art antérieur ;
- la figure 2 schématise un système de diffusion de contenu vidéo apte à la mise en oeuvre de l'invention selon un premier mode de réalisation ;
- la figure 3 représente un contenu vidéo modifié par le serveur 2 du système de la figure 2, comprenant des images de base non modifiées parmi lesquelles certaines sont indexées en images clés, et des images prétransformées sélectionnées par le serveur 2 ;

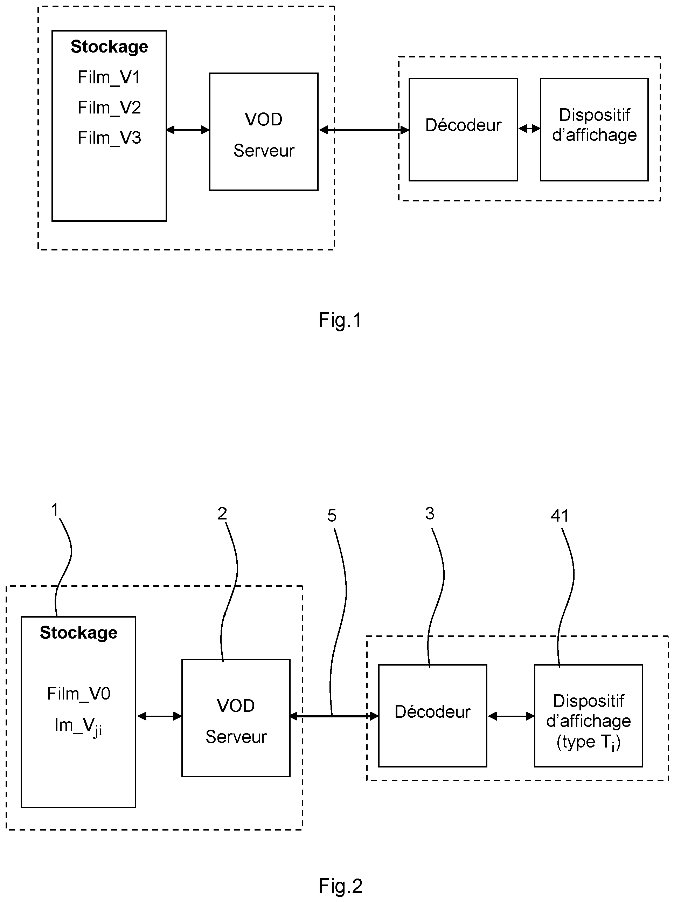

- la figure 2 schématise un système de diffusion de contenu vidéo apte à la mise en oeuvre de l'invention selon un deuxième mode de réalisation ;

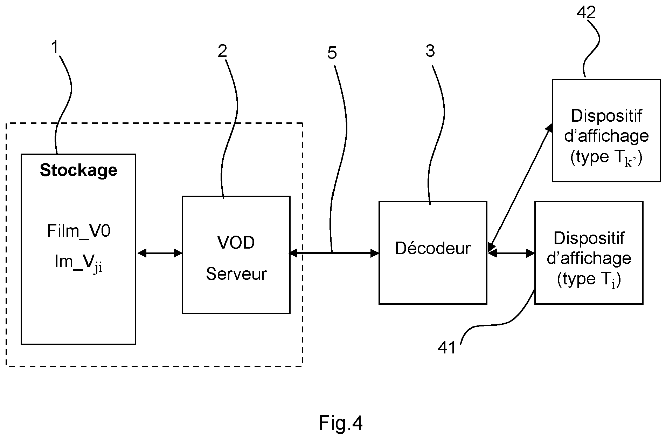

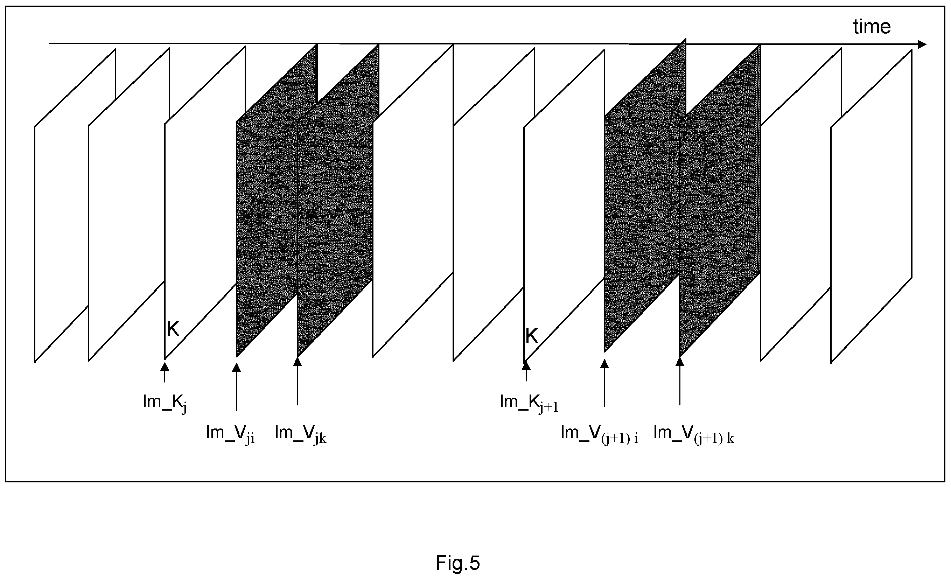

- la figure 5 représente un contenu vidéo modifié par le serveur 2 du système de la figure 4, comprenant des images de base non modifiées parmi lesquelles certaines sont indexées en images clés, et des images prétransformées sélectionnées par le serveur 2.

La figure 2 représente un système de diffusion vidéo apte à la mise en oeuvre d'un premier mode de réalisation de l'invention. Ce système comprend d'un côté une plateforme de stockage 1 d'un contenu vidéo Film_V0 relié à un serveur 2 de vidéo à la demande (« VOD »), et, de l'autre côté, un décodeur domestique 3 relié à un dispositif d'affichage d'images 41 de type $T_i$. Comme précédemment, ce système comprend également des moyens de transmission 5 aptes à transmettre des contenus vidéo du serveur 2 vers le décodeur 3.

Le décodeur 3 est adapté pour :

- recevoir un contenu vidéo du serveur 2 via les moyens de transmission 5 ;
- détecter, dans le contenu vidéo reçu, des images clé et, avec chaque image clé, une image prétransformée qui lui est associée ;
- identifier le type $T_i$ du dispositif d'affichage 41 auquel ce décodeur est connecté et pour transmettre les informations correspondantes d'identification au serveur 2 ; cette identification peut notamment utiliser le standard dit EDID;
- déduire, de chaque paire formée par une image clé et par son image prétransformée associée, une transformée de couleur apte à transformer cette image clé en cette image prétransformée et applicable à toute autre image du contenu vidéo ;
- en lien avec la détection de chaque image clé, et à l'aide d'informations reçues avec le contenu vidéo, opérer une sélection des images du contenu vidéo à transformer à l'aide de chaque transformée de couleur ;
- appliquer chaque transformée de couleur déduite à ces images sélectionnées ;
- adresser au dispositif d'affichage 41 connecté au décodeur 2 un contenu vidéo modifié comprenant les images prétransformées et les images transformées obtenues par l'application de la transformée de couleur déduites des paires comprenant ces images prétransformées, dans le même ordre temporel de succession que celui des images correspondantes du contenu vidéo reçu.

Le serveur 2 est adapté pour :

- recevoir, du serveur 2 via les moyens de transmission 5, une information d'identification de type de dispositif d'affichage d'images ;
- sélectionner, parmi une pluralité d'images prétransformées associée à n'importe quelle image clé inclue dans un contenu vidéo, l'image prétransformée de cette pluralité qui est adaptée à l'affichage de cette image clé à l'aide d'un dispositif d'affichage d'images d'un type correspondant à une information d'identification reçue ;
- insérer dans le contenu vidéo les images prétransformées sélectionnées.
- envoyer ce contenu vidéo au décodeur 2 via les moyens de transmission 5 ;
- envoyer avec le contenu vidéo des informations de sélection qui permettent de sélectionner, pour chaque image clé inclue dans le contenu vidéo, les images du contenu vidéo qu'il convient de transformer de la même façon que l'est cette image clé en l'une des d'images prétransformées associées.

Pour la mise en oeuvre de la méthode selon un premier mode de réalisation de l'invention, on prépare au préalable le contenu vidéo de base Film_V$_0$ comme suit.

Parmi les images du contenu vidéo de base, on sélectionne M images-clés Im_$K_1$, Im_$K_2$, ..., Im_$K_j$, ..., Im_$K_M$. La sélection des images clés peut être arbitraire : elles peuvent être distribuées régulièrement dans le contenu vidéo de base, par exemple une image clé toutes les 1000 images. On peut au contraire choisir une image clé dans chaque scène du contenu vidéo, de manière à ce qu'elle soit représentative au mieux des couleurs utilisées dans cette scène.

A chaque image-clé Im_$K_j$ du contenu vidéo de base, on prépare ensuite une pluralité de N versions dites prétransformées Im_$V_{j1}$, Im_$V_{j2}$, ..., Im_$V_{ji}$, ..., Im_$V_{jN}$ de cette même image clé, chaque version Im_$V_{ji}$ de cette même image clé Im_$K_j$ étant adaptée à un type correspondant $T_i$ de dispositif d'affichage d'images. Cette préparation est effectuée de manière analogue à celle des différentes versions d'un même contenu vidéo, telle que décrite dans l'art antérieur. Ainsi, à chaque image clé Im_$K_j$, est associée une pluralité de N images dites prétransformées Im_$V_{j1}$, Im_$V_{j2}$, ..., Im_$V_{ji}$, ..., Im_$V_{jN}$.

A chaque image-clé Im_$K_j$, on associe ensuite également une sélection d'images du contenu vidéo qu'il convient de transformer de la même façon que l'est cette image clé Im_$K_j$ en l'une des d'images prétransformées associées ; cette sélection ne comprend généralement pas l'image-clé elle-même ; cette sélection concerne par exemple toutes les images comprises entre cette image-clé Im_$K_j$ et l'image-clé suivante Im_$K_{j+1}$. Dans le cas d'images clé représentatives des couleurs d'une scène tel que précédemment décrit, cette sélection concerne de préférence toutes les images de cette même scène.

La sélection des images clés dans le contenu et la sélection des autres images du contenu à associer à une image clé font l'objet, d'une manière connue en elle-même, d'une indexation de chaque image du contenu.

Sur la plate-forme de stockage 1, on stocke donc le contenu vidéo dont les images sont ainsi indexées et les MxN images prétransformées Im_$V_{j-1 \text{ à } M ; i=1}$ à N.

Ainsi, au lieu de stocker sur la plate-forme de stockage, comme dans l'art antérieur, N versions différentes Film_$V_{i=1 \text{ à } N}$ du même contenu vidéo de base Film_$V_0$, on ne prépare plus et on ne stocke plus que NxM images prétransformées, ce qui nécessite beaucoup moins de ressources de préparation et de stockage. Avantageusement, on prépare directement, sans passer par les différentes versions complètes de contenu vidéo, pour chaque image clé Im_$K_j$, une série de N images prétransformées Im_$V_{j1}$, Im_$V_{j2}$, ..., Im_$V_{ji}$, ..., Im_$V_{jN}$ adaptées respectivement à un type $T_1$, $T_2$, ..., $T_i$, ..., $T_N$ de dispositif d'affichage d'images.

Le décodeur 3 identifie le type $T_i$ de dispositif d'affichage d'images auquel il est connecté, et transmet cette information d'identification au serveur 2 via les moyens de transmission 5. A l'aide de cette information d'identification, pour chaque image-clé Im_$K_j$, le serveur 2 sélectionne, parmi la pluralité d'images prétransformées Im_$V_{j1}$, Im_$V_{j2}$, ..., Im_$V_{ji}$, ..., Im_$V_{jN}$ associée à cette image clé, l'image prétransformée Im_$V_{ji}$ de cette pluralité qui est adaptée à l'affichage de cette image clé Im_$K_j$ à l'aide de ce type $T_i$ de dispositif. Pour un type $T_i$ de dispositif d'affichage d'images, on aboutit ainsi globalement à la sélection de M images prétransformées Im_$V_{j=1 \text{ à } M ; i}$.

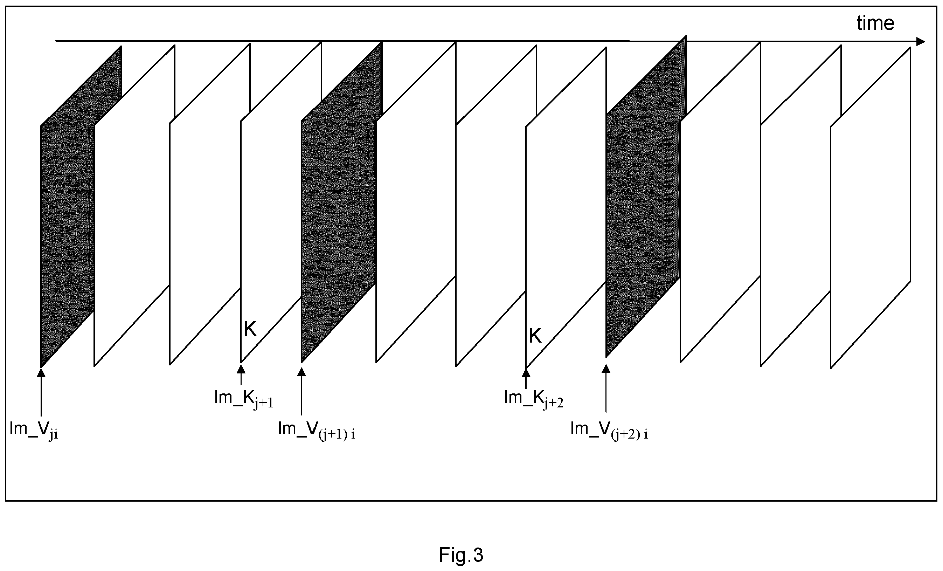

Ensuite, avant de transmettre le contenu vidéo Film_V0 au décodeur 3, le serveur modifie ce contenu en y insérant les M images prétransformées Im_$V_{j=1 \text{ à } M ; i}$. Cette insertion dans le contenu vidéo est de préférence effectuée de manière à ce que chaque image prétransformée Im_$V_{ji}$ se substitue à une image immédiatement adjacente à l'image-clé qui lui est associée Im_$K_j$, de préférence à une image qui suit immédiatement cette image-clé. On aboutit alors au contenu vidéo tel que décrit à la figure 3. Ce contenu vidéo comprend donc des images de base non modifiées parmi lesquelles certaines sont indexées « K » en images clés, et des images prétransformées qui sont sélectionnées par le serveur 2, tel que précédemment décrit.

A l'aide des moyens de transmission 5, le serveur 2 transmet alors au décodeur 3 le contenu vidéo modifié avec les informations de sélection précédemment décrites, stockées, qui permettent de sélectionner, pour chaque image clé, les images du contenu vidéo qu'il convient de transformer de la même façon que l'est cette image clé en son image prétransformée associée.

Le décodeur 3 reçoit le contenu vidéo modifié et ces informations de sélection. De chaque image-clé Im_$K_j$ et de l'image prétransformée qui lui est associée Im_$V_{ji}$, le décodeur déduit, par exemple comme décrit ci-dessous, une transformée de couleur $Tr_{ji}$ apte à transformer cette image-clé Im_$K_j$ en cette image prétransformée sélectionnée Im_$V_{ji}$.

Pour la déduction de la transformée de couleur à partir de cette paire d'images formée d'une image-clé et de l'image prétransformée sélectionnée qui lui est associée, on peut par exemple procéder comme suit :

- On construit des paires de couleurs se correspondant entre l'image-clé et l'image prétransformée, chaque paire de couleur étant formée de la couleur d'un pixel de l'image-clé dans une espace de couleur du contenu vidéo, représentée par exemple par des coordonnées trichromatiques X,Y,Z dans un espace visuel de couleur CIE-XYZ, et de la couleur du même pixel dans l'image prétransformée dans une espace de couleur du dispositif d'affichage d'images de type $T_i$, représentée par exemple par des coordonnées trichromatiques R,G,B dans l'espace linéaire de couleur du dispositif d'affichage d'images de type $T_i$ ;

- On obtient ainsi une table de correspondance (« Look Up Table » en langue anglaise), avec, comme valeurs d'entrée, les couleurs de l'image-clé, et, comme valeurs de sortie, les couleurs de l'image prétransformée.

- A l'aide des valeurs d'entrée de cette table, on forme des tétraèdres d'entrée dans l'espace de couleur du contenu vidéo de manière à ce que les quatre sommets de chaque tétraèdre correspondent à quatre valeurs d'entrée adjacentes dans cet espace, et on forme les tétraèdres correspondants de sortie dans l'espace de couleur du dispositif d'affichage de manière à ce que les quatre sommets de chaque tétraèdre correspondent à quatre valeurs de sortie adjacentes dans cet espace ; ainsi, la table de correspondance permet de faire correspondre chaque tétraèdre d'entrée à un tétraèdre de sortie.

A chaque image-clé Im_$K_j$, à l'aide des informations transmises avec le contenu vidéo, le décodeur associe une sélection d'images du contenu vidéo, différentes de l'image-clé Im_$K_j$, qui sont à transformer de la même façon que l'est cette l'image clé en son image prétransformée sélectionnée.

Pour chaque image clé Im_$K_j$, le décodeur applique, par exemple comme décrit ci-dessous, la transformée de couleur $Tr_{ji}$ qui lui est déduite à chacune des images de la sélection qui est associée à cette image clé ; on obtient ainsi des images transformées.

La transformée de couleur que l'on déduit de la paire d'images formée d'une image-clé Im_$K_j$ et de l'image prétransformée sélectionnée Im_$V_{ji}$ qui lui est associée opère alors comme suit, pour passer d'une image à transformer à une image transformée :

- Pour chaque pixel d'une image à transformer, ou pixel d'entrée, on identifie d'une manière connue en elle-même le tétraèdre d'entrée de l'espace de couleur du contenu vidéo auquel la couleur de ce pixel appartient : les sommets de ce tétraèdre sont par exemple représentés par les coordonnées trichromatiques suivantes : $X_0Y_0Z_0$, $X_1Y_1Z_1$, $X_2Y_2Z_2$, $X_3Y_3Z_3$;
- A l'aide de la table de correspondance préalablement décrite qui définit la transformée de couleur $Tr_{ji}$, on recherche le tétraèdre de sortie correspondant au tétraèdre d'entrée qui a été identifié ; les sommets de ce tétraèdre sont par exemple représentés par les coordonnées trichromatiques suivantes : $R_0G_0B_0$, $R_1G_1B_1$, $R_2G_2B_2$, $R_3G_3B_3$ ;
- On calcule un déterminant DET selon la formule :

$$ DET = \begin{vmatrix} a_{XYZ} & b_{XYZ} & c_{XYZ} \\ a_{XYZ}{}' & b_{XYZ}{}' & c_{XYZ}{}' \\ a_{XYZ}{}'' & b_{XYZ}{}'' & c_{XYZ}{}'' \end{vmatrix} $$

avec :

$$ a_{XYZ} = X_1 - X_0, \quad a_{XYZ}{}' = Y_1 - Y_0, \quad a_{XYZ}{}'' = Z_1 - Z_0 $$

$$ b_{XYZ} = X_2 - X_0, \quad b_{XYZ}{}' = Y_2 - Y_0, \quad b_{XYZ}{}'' = Z_2 - Z_0 $$

$$ c_{XYZ} = X_3 - X_0, \quad c_{XYZ}{}' = Y_3 - Y_0, \quad c_{XYZ}{}'' = Z_3 - Z_0 $$

- On calcule alors les coefficients suivants :

$$ u_s = \frac{\begin{vmatrix} d_{XYZ} & b_{XYZ} & c_{XYZ} \\ d_{XYZ}{}' & b_{XYZ}{}' & c_{XYZ}{}' \\ d_{XYZ}{}'' & b_{XYZ}{}'' & c_{XYZ}{}'' \end{vmatrix}}{DET}, $$

$$ v_s = \frac{\begin{vmatrix} a_{XYZ} & d_{XYZ} & c_{XYZ} \\ a_{XYZ}{}' & d_{XYZ}{}' & c_{XYZ}{}' \\ a_{XYZ}{}'' & d_{XYZ}{}'' & c_{XYZ}{}'' \end{vmatrix}}{DET}, $$

$$w_s = \frac{\begin{vmatrix} a_{XYZ} & b_{XYZ} & d_{XYZ} \\ a_{XYZ}' & b_{XYZ}' & d_{XYZ}' \\ a_{XYZ}'' & b_{XYZ}'' & d_{XYZ}'' \end{vmatrix}}{DET}$$

avec $d_{XYZ} = X_s - X_0$, $d_{XYZ}' = Y_s - Y_0$, $d_{XYZ}'' = Z_s - Z_0$

- On obtient alors les coordonnées trichromatiques $R_S G_S B_S$ de la couleur du pixel de l'image transformée, qui correspond au pixel d'entrée de l'image à transformer, selon les formules :

$$R_s = a_{RGB} u_s + b_{RGB} v_s + c_{RGB} w_s + R_0$$

$$G_s = a_{RGB}' u_s + b_{RGB}' v_s + c_{RGB}' w_s + G_0$$

$$B_s = a_{RGB}'' u_s + b_{RGB}'' v_s + c_{RGB}'' w_s + B_0$$

avec :

$$a_{RGB} = R_1 - R_0, \quad a_{RGB}' = G_1 - G_0, \quad a_{RGB}'' = B_1 - B_0$$

$$b_{RGB} = R_2 - R_0, \quad b_{RGB}' = G_2 - G_0, \quad b_{RGB}'' = B_2 - B_0$$

$$c_{RGB} = R_3 - R_0, \quad c_{RGB}' = G_3 - G_0, \quad c_{RGB}'' = B_3 - B_0$$

En appliquant cette méthode à chacune des images du contenu vidéo de la sélection qui est associée à une image clé Im_K$_j$, on obtient ainsi une série d'images transformées. En procédant de même pour chaque image clé, on obtient ainsi une série d'images transformées pour chaque image clé.

Toute autre méthode apte à déduire une transformée de couleur d'une paire formée par une image d'entrée et une image de sortie peut être utilisée sans se départir de l'invention.

En raboutant toutes les images transformées obtenues et les images prétransformées Im_V$_{j-1 \text{ à } M ; i}$ dans le même ordre temporel de succession que celui des images correspondantes du contenu vidéo initial, on obtient, du côté du décodeur, une version modifiée du contenu vidéo qui est adaptée pour afficher correctement le contenu vidéo sur le dispositif d'affichage de type T$_i$ connecté au décodeur. Cette version modifiée est très proche de la version correspondante Film_V$_i$ qu'on utilisait dans l'art antérieur, tel que précédemment décrit.

Le décodeur envoie ensuite à l'afficheur cette version modifiée du contenu vidéo pour obtenir l'affichage de ce contenu vidéo.

Quelle que soit le type de dispositif d'affichage d'images connecté au décodeur, on parvient, grâce à l'invention, à obtenir un affichage quasi-identique d'un contenu vidéo donné, avec des ressources limitées de stockage et de préparation de contenu, notamment du côté du serveur. En outre, l'insertion d'images prétransformées dans la transmission du contenu vidéo au décodeur permet d'adapter en continu la transformation des couleurs pour l'affichage.

Ainsi, la transformation des couleurs peut être adaptée spécifiquement à chaque scène du contenu vidéo, en fonction, notamment, de la palette de couleurs propre à chaque scène.

Un autre avantage de l'invention est qu'un décodeur qui ne disposerait pas de moyens pour identifier les paires formées chacune d'une image clé et d'une image prétransformée pourrait néanmoins fournir au dispositif d'affichage d'images auquel il est connecté un contenu vidéo affichable, puisque l'insertion des images prétransformées dans le contenu vidéo transmis au décodeur ne perturberait que très faiblement la visualisation.

La figure 4 représente un système de diffusion vidéo apte à la mise en oeuvre d'un deuxième mode de réalisation de l'invention. Ce système est identique au précédent à la différence essentielle près qu'il comprend en outre un deuxième dispositif d'affichage d'images 42 de type $T_k$.connecté au même décodeur 2, ce type $T_k$.étant différent du type $T_1$.du dispositif 41.

Le décodeur 3, également identique, est notamment adapté en outre :

- identifier le type $T_i$, $T_k$ de chaque dispositif d'affichage 41, 42 auquel le décodeur 2 est connecté ;
- transmettre les informations correspondantes d'identification de ce type au serveur (2) ;
- détecter, avec chaque image clé détectée, une image prétransformée associée pour chaque type identifié $T_i$, $T_k$ de dispositif d'affichage ;
- adresser à chaque dispositif d'affichage 41, 42 connecté au décodeur 2 un contenu vidéo modifié comprenant les images prétransformées qui sont associées au type identifié $T_i$, $T_k$ de ce dispositif d'affichage 41, 42 et comprenant les images transformées obtenues par l'application de la transformée de couleur déduites des paires comprenant ces images prétransformées, dans le même ordre temporel de succession que celui des images correspondantes du contenu vidéo reçu.

Le serveur 2, également identique, est notamment adapté en outre :

- recevoir, du serveur 2 via les moyens de transmission 5, une information d'identification de chaque type $T_i$, $T_k$ de dispositif d'affichage 41, 42 ;
- sélectionner, parmi une pluralité d'images prétransformées associée à n'importe quelle image clé inclue dans un contenu vidéo, les images prétransformées de cette pluralité qui sont adaptée à l'affichage de cette image clé à l'aide des dispositif d'affichage 41, 42 de type $T_i$, $T_k$ correspondant aux informations d'identification reçue.

Pour la mise en oeuvre de la méthode selon un deuxième mode de réalisation de l'invention, on prépare au préalable le contenu vidéo de base Film_$V_0$ comme précédemment. Sur la plate-forme de stockage 1, on stocke donc comme précédemment le contenu vidéo dont les images sont indexées et les MxN images prétransformées Im_$V_{j-1 \text{ à } M ; i=1 \text{ à } M}$ ;

Le décodeur 3 identifie ensuite les type $T_i$, $T_k$ de dispositifs d'affichage d'images auquel il est connecté, et transmet cette information d'identification au serveur 2 via les moyens de transmission 5. A l'aide de cette information d'identification, pour chaque image-clé Im_$K_j$, le serveur 2 sélectionne, parmi la pluralité d'images prétransformées Im_$V_{j1}$, Im_$V_{j2}$, ..., Im_$V_{ji}$, ..., Im_$V_{jN}$ associée à cette image clé, les images prétransformées Im_$V_{ji}$, Im_$V_{jk}$ de cette pluralité qui sont adaptée à l'affichage de cette image clé Im_$K_j$ respectivement à l'aide du type $T_i$ et du type $T_k$ de dispositif d'affichage. Pour un type $T_i$ de dispositif d'affichage d'images, on aboutit ainsi globalement à la sélection de 2xM images prétransformées Im_$V_{j=1 \text{ à } M ; i}$, Im_$V_{j=1 \text{ à } M ; k}$.

Ensuite, avant de transmettre le contenu vidéo Film_V0 au décodeur 3, le serveur modifie ce contenu en y insérant les 2xM images prétransformées Im_$V_{j=1 \text{ à } M ; i}$. Cette insertion dans le contenu vidéo est de préférence effectuée de manière à ce que chaque couple d'images prétransformées Im_$V_{ji}$, Im_$V_{jk}$ se substitue à un couple d'images immédiatement adjacente à l'image-clé qui lui est associée Im_$K_j$, de préférence à un couple d'images qui suivent immédiatement cette image-clé. On aboutit alors au contenu vidéo tel que décrit à la figure 5.

A l'aide des moyens de transmission 5, le serveur 2 transmet alors au décodeur 3 le contenu vidéo modifié avec les informations de sélection précédemment décrites, stockées, qui permettent de sélectionner, pour chaque image clé, les images du contenu vidéo qu'il convient de transformer de la même façon que l'est cette image clé en l'une et l'autre des images prétransformées associées.

Le décodeur 3 reçoit le contenu vidéo modifié et ces informations de sélection, et dispose des informations d'identification des types $T_i$, $T_k$ des dispositifs d'affichage 41, 42 qui lui sont connectés.

De chaque paire comprenant une image-clé Im_$K_j$ et l'une des images prétransformées Im_$V_{ji}$, Im_$V_{jk}$ qui lui sont associées, le décodeur déduit, comme précédemment, une transformée de couleur $Tr_{ji}$ , $Tr_{jk}$ apte à transformer cette image-clé Im_$K_j$ en cette image prétransformée.

A chaque image-clé Im_$K_j$, à l'aide des informations transmises avec le contenu vidéo, le décodeur associe une sélection d'images du contenu vidéo, différentes de l'image-clé Im_$K_j$, qui sont à transformer de la même façon que l'est cette l'image clé en son image prétransformée sélectionnée.

Pour chaque image clé Im_$K_j$, le décodeur applique, comme précédemment, les transformées de couleur $Tr_{ji}$, $Tr_{ik}$ qui lui sont déduite à chacune des images de la sélection qui est associée à cette image clé ; on obtient ainsi des images transformées.

Le décodeur 2 envoie ensuite à chaque dispositif d'affichage 41, 42 un contenu vidéo modifié spécifique qui comprend les images prétransformées qui sont associées au type identifié $T_i$, $T_k$ de ce dispositif d'affichage et les images transformées obtenues par l'application des transformées de couleur déduites des paires comprenant ces images prétransformées, dans le même ordre temporel de succession que celui des images correspondantes du contenu vidéo reçu par le décodeur 2.

L'invention s'applique de manière similaire aux cas où plus de deux dispositifs d'affichage d'images sont connectés au même décodeur 3.

L'invention s'applique de manière similaire aux cas où plusieurs décodeurs sont reliés au même serveur 2 par les mêmes moyens de transmission 5, ou par des moyens différents.

Quelle que soit le type de dispositif d'affichage d'images connecté au décodeur, on parvient, grâce à l'invention, à obtenir un affichage quasi-identique d'un contenu vidéo donné, avec des ressources limitées de stockage et de préparation de contenu, notamment du côté du serveur. En outre, l'insertion d'images prétransformées dans la transmission du contenu vidéo au décodeur permet d'adapter en continu la transformation des couleurs pour l'affichage.

Ainsi, la transformation des couleurs peut être adaptée spécifiquement à chaque scène du contenu vidéo, en fonction, notamment, de la palette de couleurs propre à chaque scène.

Un autre avantage de l'invention est qu'un décodeur qui ne disposerait pas de moyens pour identifier les paires formées chacune d'une image clé et d'une image prétransformée pourrait néanmoins fournir au dispositif d'affichage auquel il est connecté un contenu vidéo affichable, puisque l'insertion des images prétransformées dans le contenu vidéo transmis au décodeur ne perturberait que très faiblement la visualisation.

L'invention s'applique à tout type de serveur de contenu vidéo et à tout type de récepteur, le décodeur n'étant qu'un type de récepteur parmi d'autres.

## Revendications

1. Procédé de traitement d'un contenu vidéo comprenant une succession temporelle d'images de base à l'aide d'au moins une image prétransformée qui est associée à une desdites images de base, chaque image de base à laquelle est associée au moins une image prétransformée étant appelée « image clé », où chaque image prétransformée représente une transformation de couleur de ladite image-clé associée, ledit procédé comprenant les étapes dans lesquelles :

   - à partir de chaque image-clé et d'une image prétransformée qui lui est associée, on déduit une transformée de couleur apte à transformer ladite image-clé en ladite image prétransformée,
   - à chaque image-clé, on associe une sélection d'images de base qui sont différentes de ladite l'image-clé,
   - on applique chaque transformée de couleur à chacune des images de base de la sélection d'images de base qui est associée à ladite image-clé, de manière à obtenir des images transformées,

   **caractérisé en ce que** chaque image prétransformée associée à une image-clé coïncide avec l'image qu'on obtiendrait par application à cette image-clé de la transformée de couleur déduite à partir de cette image-clé et de cette image prétransformée.

2. Procédé selon la revendication 1, **caractérisé en ce que** à chaque image-clé, est associée une pluralité d'images prétransformées.

3. Procédé selon la revendication 2 adapté pour l'affichage dudit contenu vidéo à l'aide de différents types de dispositifs d'affichage, **caractérisé en ce que** chaque image prétransformée de ladite pluralité représente une transformation de ladite image-clé qui adaptée à l'affichage de ladite image-clé par un desdits types de dispositif d'affichage.

4. Procédé selon la revendication 1 ou 2 **caractérisé en ce qu'**il comprend également les étapes dans lesquelles :

   - on identifie au moins un type de dispositif d'affichage à l'aide duquel on souhaite afficher ledit contenu vidéo,
   - pour effectuer ladite déduction de transformée de couleur à partir de chaque image clé, on sélectionne auparavant l'image prétransformée à associer à ladite image-clé en fonction dudit type de dispositif d'affichage identifié.

5. Procédé d'affichage d'un contenu vidéo à l'aide d'un dispositif d'affichage d'un type prédéterminé, comprenant un traitement du contenu vidéo selon la revendication 4, et une étape d'affichage des images transformées et de l'au moins une image pré-transformée qui est sélectionnée, dans le même ordre temporel de succession que celui des images de base correspondantes du contenu vidéo.

6. Récepteur de contenu vidéo apte à être connecté à un serveur (2) et à au moins un dispositif d'affichage d'images (41, 42) comprenant des moyens pour :

- recevoir un contenu vidéo comprenant une succession temporelle d'images,
- identifier le type $T_i$, $T_k$ de chaque dispositif d'affichage (41, 42) auquel ce récepteur est connecté ;
- transmettre les informations correspondantes d'identification de ce type au serveur (2) ;
- détecter, parmi les images du contenu vidéo reçu, des images dites images clé (Im_$K_{j=1 \text{ à } M}$), et, avec chaque image clé détectée, une image prétransformée associée pour chaque type identifié de dispositif d'affichage ;
- déduire de chaque paire formée par une image clé Im_$K_j$ et par une image prétransformée associée Im_$V_{ji}$, une transformée de couleur $Tr_{ji}$ apte à transformer cette image clé en cette image prétransformée et applicable à toute autre image du contenu vidéo reçu ;
- recevoir, avec le contenu vidéo, des informations qui permettent de sélectionner, pour chaque image clé détectée, les autres images du contenu vidéo qu'il convient de transformer de la même façon que l'est cette image clé en l'une des d'images prétransformées associées ;
- en lien avec la détection de chaque image clé Im_$K_j$, et à l'aide desdites informations reçues avec le contenu vidéo, opérer dans le contenu vidéo une sélection d'images à transformer à l'aide de l'au moins une transformée de couleur déduite d'une paire comprenant ladite image clé;
- appliquer chaque transformée de couleur aux images sélectionnées en lien avec l'image clé Im_$K_j$ comprise dans la paire de laquelle est déduite cette transformée de couleur ;
- adresser à chaque dispositif d'affichage (41, 42) connecté au récepteur un contenu vidéo modifié comprenant les images prétransformées qui sont associées au type identifié $T_i$, $T_k$ dudit dispositif d'affichage et comprenant les images transformées obtenues par l'application des transformées de couleur déduites des paires comprenant lesdites images prétransformées, dans le même ordre temporel de succession que celui des images correspondantes du contenu vidéo reçu.

## Patentansprüche

1. Verfahren zur Verarbeitung eines Videoinhalts mit einer zeitlichen Reihenfolge von Grundbildern anhand mindestens eines vorverarbeiteten Bilds, das einem der Grundbilder zugeordnet ist, wobei jedes Bild, dem mindestens ein vorverarbeitetes Bild zugeordnet ist, als "Schlüsselbild" bezeichnet wird, bei dem jedes vorverarbeitete Bild eine Farbtransformation des zugeordneten Schlüsselbilds darstellt, wobei das Verfahren die Schritte umfasst, bei denen

   - aus jedem Schlüsselbild und einem ihm zugeordneten vorverarbeiteten Bild eine Farbtransformation abgeleitet wird, die geeignet ist, das Schlüsselbild in das vorverarbeitete Bild zu transformieren,
   - jedem Schlüsselbild eine Auswahl von Grundbildern zugeordnet wird, die sich von dem Schlüsselbild unterscheiden,
   - jede Farbtransformation auf jedes der Grundbilder der Auswahl von Grundbildern, welche dem Schlüsselbild zugeordnet ist, so angewendet wird, dass sich transformierte Bilder ergeben,

   **dadurch gekennzeichnet, dass** jedes einem Schlüsselbild zugeordnete vortransformierte Bild mit dem Bild übereinstimmt, das sich aufgrund der Anwendung der aus diesem Schlüsselbild und aus diesem vortransformierten Bild abgeleiteten Farbtransformation auf dieses Bild ergäbe.

2. Verfahren nach Anspruch 1, **dadurch gekennzeichnet, dass** jedem Schlüsselbild eine Vielzahl von vortransformierten Bildern zugeordnet ist.

3. Verfahren nach Anspruch 2, geeignet für das Anzeigen des Videoinhalts mit Hilfe verschiedener Typen von Anzeigevorrichtungen, **dadurch gekennzeichnet, dass** jedes vortransformierte Bild der Vielzahl eine Transformation des Schlüsselbilds darstellt, die für die Anzeige des Schlüsselbilds durch einen der Anzeigevorrichtungstypen geeignet ist.

4. Verfahren nach Anspruch 1 oder 2, **dadurch gekennzeichnet, dass** es ferner die Schritte umfasst, bei denen:

   - mindestens ein Anzeigevorrichtungstyp identifiziert wird, mit dem der Videoinhalt angezeigt werden soll,
   - zur Ableitung der Farbtransformation aus jedem Schlüsselbild zuvor das vortransformierte Bild ausgewählt wird, das dem Schlüsselbild in Abhängigkeit von dem identifizierten Anzeigevorrichtungstyp zuzuordnen ist.

5. Verfahren zur Anzeige eines Videoinhalts mit Hilfe einer Anzeigevorrichtung eines vorgegebenen Typs, umfassend eine Verarbeitung des Videoinhalts nach Anspruch 4 und einen Schritt der Anzeige der transformierten Bilder und des mindestens einen ausgewählten vortransformierten Bilds in derselben zeitlichen Reihenfolge wie die entsprechenden Grundbilder des Videoinhalts.

6. Empfänger eines Videoinhalts, der geeignet ist, mit einem Server (2) und mindestens einer Bildanzeigevorrichtung (41, 42) verbunden zu werden, umfassend Mittel:

- für den Empfang eines Videoinhalts mit einer zeitlichen Bilderreihenfolge,
- für die Identifizierung des Typs $T_i$, $T_k$ jeder Anzeigevorrichtung (41, 42), mit der dieser Empfänger verbunden ist,
- für die Übertragung der entsprechenden Informationen über die Identifizierung dieses Typs an den Server (2),
- für die Detektion der so genannten Schlüsselbilder ($Im\_K_{j=1\,bis\,M}$) unter den Bildern des erhaltenen Videoinhalts und eines zugeordneten vortransformierten Bilds bei jedem detektieren Schlüsselbild für jeden identifizierten Anzeigevorrichtungstyp,
- für die Ableitung einer Farbtransformation $Tr_{ji}$ aus jedem Paar aus einem Schlüsselbild $Im\_K_j$ und einem zugeordneten vortransformierten Bild $Im\_V_{ji}$, die geeignet ist, dieses Schlüsselbild in dieses vortransformierte Bild zu transformieren und die auf jedes andere Bild des erhaltenen Videoinhalts anwendbar ist,
- für den Erhalt der Informationen zusammen mit dem Videoinhalt, welche es ermöglichen, für jedes detektierte Schlüsselbild die anderen Bilder des Videoinhalts auszuwählen, die wie dieses Schlüsselbild in eines der zugeordneten vortransformierten Bilder zu transformieren sind,
- für die Durchführung einer Auswahl von Bildern, die mit Hilfe der mindestens einen aus einem Paar mit dem Schlüsselbild abgeleiteten Farbtransformation zu transformieren sind, in dem Videoinhalt in Verbindung mit der Detektion jedes Schlüsselbilds $Im\_K_j$ und mit Hilfe der mit dem Videoinhalt erhaltenen Informationen,
- für die Anwendung jeder Farbtransformation auf die ausgewählten Bilder in Verbindung mit dem Schlüsselbild $Im\_K_j$, das in dem Paar enthalten ist, aus dem diese Farbtransformation abgeleitet ist,
- für die Adressierung - an jede mit dem Empfänger verbundene Anzeigevorrichtung (41, 42) - eines geänderten Videoinhalts, der die vortransformierten Bilder enthält, die dem identifizierten Anzeigevorrichtungstyp $T_i$, $T_k$ zugeordnet sind, sowie die transformierten Bilder, die aus der Anwendung der Farbtransformationen resultieren, welche aus den Paaren mit den vortransformierten Bildern abgeleitet werden, in derselben zeitlichen Reihenfolge wie die entsprechenden Bilder des erhaltenen Videoinhalts.

**Claims**

1. Method for processing a video content comprising a temporal succession of base images using at least one pre-transformed image which is associated with one of said base images, each base image with which is associated at least one pre-transformed image being called a "key image", wherein each pre-transformed image represents a color transformation of said associated key image, said method comprising the steps wherein:

- from each key image and a pre-transformed image that is associated with it, a color transform is derived able to transform said key-image into said pre-transformed image,
- for each key image, a selection of base images is associated that are different from said key image,
- each color transform is applied to each of the base images of the selection that is associated with said key image, so as to obtain transformed images,

**characterised in that** each pre-transformed image associated with a key image coincides with the image which would be obtained by application to this key image of the color transform derived from this key image and this pre-transformed image.

2. Method according to claim 1, **characterized in that** with each key image there is associated a plurality of pre-transformed images.

3. Method according to claim 2 adapted for displaying said video content using different types of display devices, **characterized in that** each pre-transformed image of said plurality represents a transformation of said key image which is adapted to displaying said key image by one of said types of display device.

4. Method according to claim 1 or 2, **characterized in that** it also comprises the steps wherein:

- at least one type of display device is identified with the help of which you want to display said video content,
- to perform said color transform derivation from each key image, the pre-transformed image to associate with said key image is selected beforehand according to said identified display type.

5. Method for displaying a video content using a display device of a predetermined type, comprising a processing of the video content according to claim 4, and a step of displaying the transformed images and the at least one pre-transformed image which is selected, in the same temporal order of succession as that of the corresponding base images of the video content.

6. Video content receiver capable of being connected to a server (2) and to at least one image display device (41, 42) comprising means for:

    - receiving a video content comprising a temporal succession of images,

    - identify the type $T_i$, $T_k$ of each display device (41, 42) to which this receiver is connected,

    - transmit the corresponding information for identifying this type of server (2),

    - detect, among the images of the received video content, images called key images ($Im\_K_{j=1\text{ to }M}$), and, with each detected key image, a pre-transformed image for each identified type of display device,

    - derive from each pair formed by a key image $Im\_K_j$ and by an associated pre-transformed image $Im\_V_{ji}$; a color transform $Tr_{ji}$ able to transform this key image into pre-transformed image and applicable to any other image of the received video content,

    - receive, with the video content, information that can select, for each key image detected, the other images of the video content that it is necessary to transform in the same way that is this key image in one of the associated pre-transformed images,

    - in relation with the detection of key image $Im\_K_j$, and using said received information with the video content, operate in the video content a selection of images to transform using the at least one color transform derived from a pair comprising said key image,

    - apply each color transform to the selected images in relation with the key image $Im\_K_j$ included in the pair from which this color transform is derived,

    - send each display device (41, 42) connected to the receiver a modified video content comprising the pre-transformed images which are associated with the identified type $T_i$, $T_k$ of said display device and comprising the transformed images obtained by the application of color transforms derived from pairs comprising said pre-transformed images, in the same temporal order of succession as that of the corresponding images of the video content received.

## Stockage

Film_V1

Film_V2

Film_V3

VOD

Serveur

Décodeur

Dispositif d'affichage

Fig.1

1

2

5

3

41

## Stockage

Film_V0

Im_V$_{ji}$

VOD

Serveur

Décodeur

Dispositif d'affichage (type T$_i$)

Fig.2

Fig.3

Fig.4

Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008085150 A
- EP 1845704 A
- US 2002118380 A
- WO 2008100946 A2
- WO 2010021705 A1
- US 2005134801 A